# EUROPÄISCHE PATENTSCHRIFT

(11) **EP 0 291 778 B1**
(45) Veröffentlichungstag und Bekanntmachung des Hinweises auf die Patenterteilung: **16.03.1994**
(21) Anmeldenummer: 88107254.0
(22) Anmeldetag: 05.05.1988
(51) Int. Cl.: C08G 73/22, H01B 3/30

(54) **Verfahren zur Herstellung hochwärmebeständiger Dielektrika**
Process for the preparation of high temperature-resistant dielectrics
Procédé de préparation de diélectriques résistant à de hautes températures

(30) Priorität: 18.05.1987 DE 3716630
(43) Veröffentlichungstag der Anmeldung: 23.11.1988
(73) Patentinhaber: SIEMENS AKTIENGESELLSCHAFT, 80333 München (DE)
(72) Erfinder: Ahne, Hellmut, Dr., D-8551 Röttenbach (DE); Hammerschmidt, Albert, Dr., D-8520 Erlangen (DE)

(56) Entgegenhaltungen:
- DE-A- 2 647 004
- FR-A- 1 467 620
- FR-A- 1 548 308
- FR-A- 2 189 454
- US-A- 3 332 907

## Beschreibung

Die Erfindung betrifft ein Verfahren zur Herstellung hochwärmebeständiger Dielektrika auf der Basis organischer Polymerer auf einem Substrat.

Organische Dielektrika, d.h. nicht-leitende Stoffe, werden vor allem in der Mikroelektronik als planarisierende Isolierschichten und als Passivierungsschichten bei der Herstellung von Bauelementen eingesetzt, beispielsweise bei der Mehrlagenverschaltung von IC's. Die planarisierenden Eigenschaften sind dabei erforderlich, um Unebenheiten der Oberfläche (des Substrats), wie sie bei aufeinanderfolgenden Prozeßschritten auftreten, weitgehend auszugleichen und damit einen sicheren Mehrlagenaufbau zu ermöglichen.

Dielektrika der genannten Art, die als passivierende Isolierschichten zwischen leitenden und/oder halbleitenden Materialien dienen, verbleiben im Bauteil und müssen deshalb einer Reihe von Anforderungen genügen. Zunächst müssen diese Isolierschichten (hoch)temperaturbeständig sein, damit sie bei den modernen Verfahren wie Sputtern, Trockenätzen, Plasmaätzen und reaktives Ionenätzen, die zum Teil hohe Temperaturen erfordern, eingesetzt werden können. Sie sollen ferner gute elektrische Eigenschaften, d.h. eine niedrige Dielektrizitätskonstante und einen kleinen Verlustwinkel, besitzen. Darüber hinaus sollen diese Isolierschichten eine geringe Feuchteaufnahme aufweisen, gegen alkalische Entwickler resistent sein und hochrein hergestellt werden können, d.h. ionische Verunreinigungen lediglich im ppm- oder sub-ppm-Bereich enthalten. Eine hohe Feuchteaufnahme hat nämlich einen negativen Einfluß auf die elektrischen Kennnwerte, während ionische Verunreinigungen die elektrischen Kennwerte, die Zuverlässigkeit im Bauteil und das Feuchteverhalten negativ beeinflussen.

Herkömmliche temperaturbeständige organische Isolierschichten, d.h. Dielektrika, bestehen meistens aus Polymeren auf der Basis von Polyimiden (siehe beispielsweise: "35th Electronic Components Conference", Washington (USA), May 20-22 (1985) - Konferenzbericht 1985, Seiten 192 bis 198). Zur Herstellung hochwärmebeständiger Schichten wird dabei im allgemeinen von Polymer-Vorstufen in Form von löslichen Polyamidocarbonsäuren ausgegangen, die auf das Substrat aufgebracht und anschließend durch einen Temperprozeß in Polyimide übergeführt werden (siehe dazu: DE-OS 28 48 034).

Polyimide weisen aber nur eine geringe Resistenz gegen alkalische Entwickler auf, sie werden nämlich durch Basen gespalten. Darüber hinaus zeigen sie, hauptsächlich bedingt durch die polaren Carbonylgruppen, eine relativ hohe Feuchteaufnahme (3,8 % für 0 % → 100 % r.F., d.h. relative Feuchte, bei 25°C), und auch die elektrischen Kennwerte sind nicht zufriedenstellend:
- Dielektrizitätskonstante: ε_{25°C, 0 % r.F.} = 3,35;
- Verlustwinkel: tan δ_{25°C, 0 % r.F.} = 4,1.10⁻³;
tan δ_{25°C, 100 % r.F.} = 15.10⁻³.

Aufgabe der Erfindung ist es, ein Verfahren der eingangs genannten Art zur Herstellung von organischen Dielektrika auf einem Substrat derart auszugestalten, daß die Dielektrika nicht nur eine hohe Temperaturbeständigkeit, sondern auch gute elektrische Eigenschaften, Alkaliresistenz, eine geringe Feuchteaufnahme und eine hohe Reinheit aufweisen.

Dies wird erfindungsgemäß dadurch erreicht, daß ein oligomeres und/oder polymeres Hydroxypolyamid, gelöst in einem organischen Lösungsmittel, auf das Substrat aufgebracht wird, daß das Lösungsmittel entfernt wird und daß das Hydroxypolyamid durch Tempern bei einer Temperatur zwischen 200 und 500°C in ein Polybenzoxazol übergeführt wird, wobei das Hydroxypolyamid folgende Struktur aufweist: 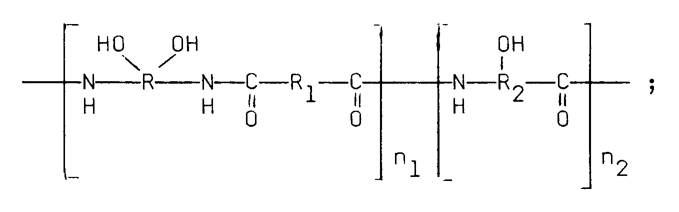
R, R₁ und R₂ sind dabei aromatische Reste,
und für n₁ und n₂ gilt folgendes:
n₁ und n₂ = 1 bis 100 oder
n₂ = 1 bis 100 und n₁ = 0.

Beim erfindungsgemäßen Verfahren werden als Hydroxypolyamide Polykondensationsprodukte eingesetzt, und zwar
- Homo-Polykondensationsprodukte aromatischer Aminohydroxycarbonsäuren und
- Co-Polykondensationsprodukte aus aromatischen Diaminodihydroxyverbindungen, aromatischen Dicarbonsäuren bzw. Dicarbonsäurechloriden und aromatischen Aminohydroxycarbonsäuren.

Bei den Hydroxypolyamiden der vorstehend genannten Art kann R folgende Bedeutung haben: 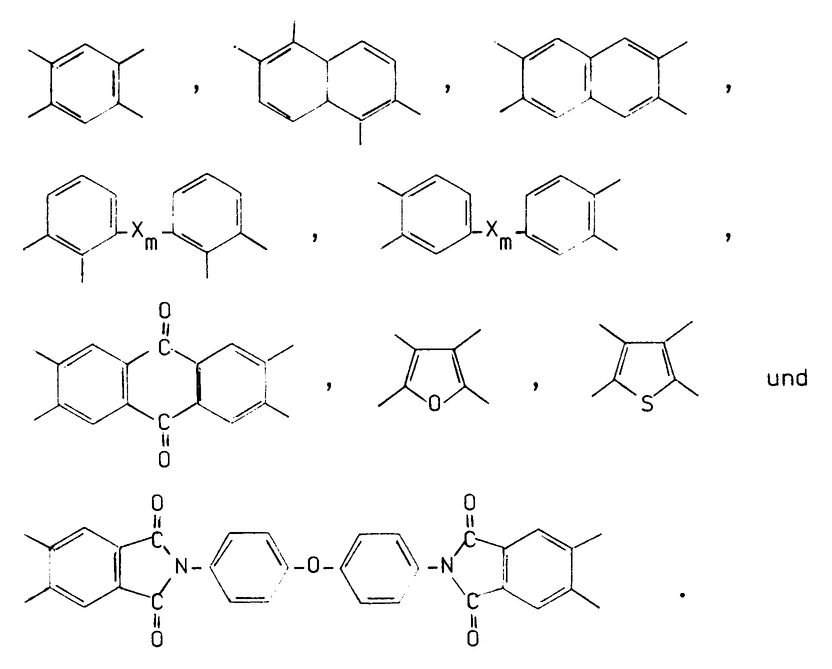
R₁ kann folgende Bedeutung haben, wobei H-Atome auch durch Cl oder Br substituiert sein können: 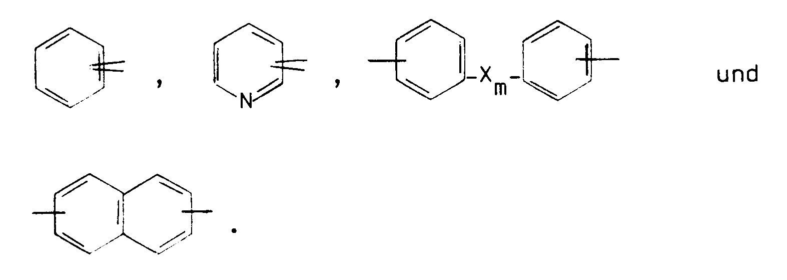
R₂ kann folgende Bedeutung haben: 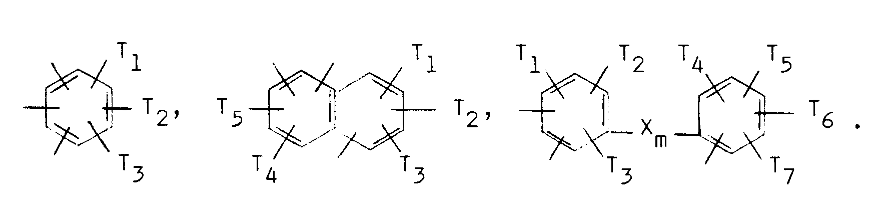
Dabei bedeuten T₁ bis T₇ H oder Alkyl, m = 0 oder 1, und X bedeutet: 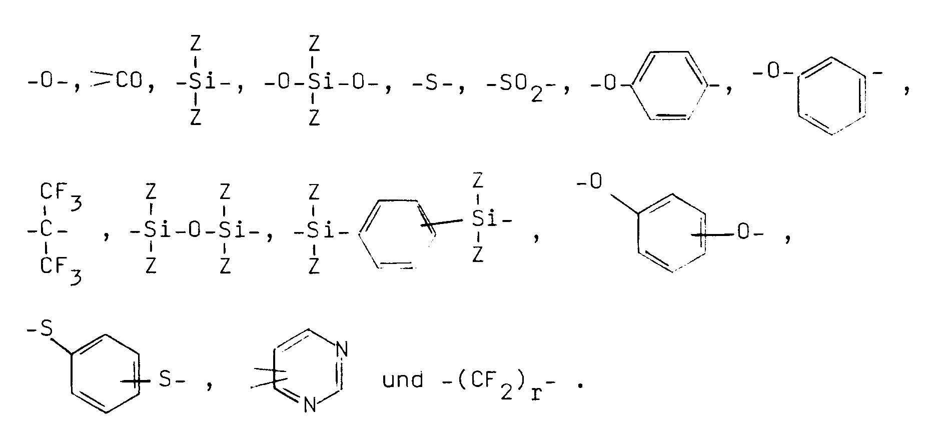
Dabei gilt folgendes:
Z = Alkyl mit 1 bis 10 Kohlenstoffatomen oder Aryl, und
r = 2 bis 18.

Vorzugsweise werden beim erfindungsgemäßen Verfahren - zur Herstellung der Dielektrika - als Polybenzoxazol-Vorstufen oligomere und/oder polymere Hydroxypolyamide in Form von Polykondensationsprodukten von 3-Amino-4-hydroxybenzoesäure eingesetzt.

Als Diaminodihydroxyverbindung können 3.3'-Dihydroxybenzidin, Isomere dieser Verbindung und auch andere hydroxylgruppenhaltige aromatische Diamine, wie 3.3'-Dihydroxy-4.4'-diaminodiphenylether, eingesetzt werden. Als Dicarbonsäure kann Isophthalsäure bzw. Isophthalsäuredichlorid sowie Terephthalsäure bzw. Terephthalsäuredichlorid verwendet werden.

Als Aminohydroxycarbonsäure dient vorzugsweise 3-Amino-4-hydroxybenzoesäure. Einsetzbar sind aber auch folgende Verbindungen: 3-Amino-4-hydroxy-4'-carboxybiphenyl, 4-Amino-3-hydroxy-4'-carboxydiphenylether, 4-Amino-3-hydroxy-4'-carboxybenzophenon, 4-Amino-3-hydroxy-4'-carboxydiphenylsulfon und 4-Amino-3-hydroxyphenyl-4'-carboxyphenyl-1.1.1.3.3.3-hexafluorpropan. Ferner können auch Isomere dieser Verbindungen eingesetzt werden.

Die nach dem erfindungsgemäßen Verfahren hergestellten Dielektrika sind organische Polymere in Form von Polybenzoxazolen. Diese Dielektrika sind bis 550°C beständig und weisen bei 470°C eine Dauertemperaturbeständigkeit von mehr als 3 h auf. Auf diese Weise wird gewährleistet, daß bei Temperprozessen bis zu 450°C, die zur Stabilisierung bestimmter Halbleiterkennwerte oft notwendig sind, ein schädliches Ausgasen, beispielsweise durch partielle Zersetzung, sicher vermieden werden kann und beim Einsatz der Dielektrika auch moderne Ionenimplantationsverfahren, Sputterprozesse und Trockenätzmethoden angewendet werden können. Diese Dielektrika eignen sich deshalb insbesondere für Anwendungen in der Mikroelektronik.

Die Dielektrika auf Polybenzoxazol-Basis besitzen gute elektrische Eigenschaften, im Vergleich zu Dielektrika auf Polyimid-Basis weisen sie sogar deutlich verbesserte und damit niedrigere elektrische Kennwerte auf:
ε_{25°C, 0 % r.F.}= 2,7; tan δ_{25°C, 0 % r.F.}= 1,8.10⁻³; tan δ_{25°C, 100 % r.F.}= 7,8.10⁻³. Ferner nehmen sie auch weniger Feuchte auf: Feuchteaufnahme _{0 % → 100 % r.F.} = 1,7 % (bei 25°C). Darüber hinaus besitzen diese Dielektrika eine ausgezeichnete Resistenz gegen Säuren, Basen und eine große Anzahl von Lösungsmitteln, wobei insbesondere die Alkaliresistenz von Bedeutung ist.

Polybenzoxazole sind im allgemeinen nur in konzentrierter Schwefelsäure und in Polyphosphorsäure löslich, d.h. in Lösungsmitteln, die für Anwendungen auf dem Gebiet der Mikroelektronik nicht in Frage kommen. Die erfindungsgemäßen Dielektrika werden deshalb aus Polymer-Vorstufen hergestellt, d.h. aus Hydroxypolyamiden, die in organischen Lösungsmitteln löslich sind. Die Polymer-Vorstufen werden dann durch einen Temperprozeß bei Temperaturen zwischen 200 und 500°C in die hochtemperaturbeständigen Polybenzoxazole umgewandelt.

Beim erfindungsgemäßen Verfahren ist ferner von Vorteil, daß die Polymer-Vorstufen eine hohe Lagerfähigkeit und eine gute Verarbeitbarkeit aufweisen. Diese löslichen Vorstufen, d.h. die Hydroxypolyamide, werden in einem organischen Lösungsmittel gelöst und in geeigneter Weise auf das Substrat aufgebracht. Als Lösungsmittel wird dabei vorzugsweise N-Methylpyrrolidon, N.N-Dimethylacetamid oder ein Gemisch davon verwendet. Es können aber auch andere Lösungsmittel mit ähnlichen Eigenschaften eingesetzt werden.

Die Lösung der Polymer-Vorstufe wird vorzugsweise mittels der Schleudertechnik auf das Substrat aufgebracht. Es können aber auch andere Beschichtungsmethoden angewendet werden, wie Tauchen, Sprühen, Bürsten oder Rollen. Die Konzentration der Polymer-Vorstufe in der Lösung beträgt dabei im allgemeinen zwischen 3 und 60 Gew.-%, vorzugsweise liegt sie zwischen 10 und 40 Gew.-%. Auf diese Weise können Schichtdicken zwischen 0,05 und einigen 100 µm erzeugt werden. Durch Schleuderbeschichtung ist es beispielsweise möglich, bei Umdrehungszahlen von 300 bis 10 000 U/min eine gleichmäßig gute Oberflächenqualität zu erzielen.

Der Lösung der Polybenzoxazol-Vorstufe können - bei dem Aufbringen auf das Substrat - Zusätze zur Verbesserung der Haftung und/oder der Benetzung zugegeben werden. Derartige Zusätze, d.h. Haftvermittler bzw. Benetzungsmittel, können aber auch - vor dem Aufbringen der Lösung - direkt auf das Substrat aufgebracht werden.

Nach dem Aufbringen der Lösung auf das Substrat wird das Lösungsmittel entfernt, d.h. es wird getrocknet. Dies kann bei Raumtemperatur oder bei erhöhter Temperatur erfolgen; vorzugsweise wird das Lösungsmittel bei einer Temperatur zwischen 50 und 120°C entfernt. Bei der Entfernung des Lösungsmittels kann im übrigen auch im Vakuum gearbeitet werden.

Nach dem Trocknen wird das auf das Substrat aufgebrachte Material getempert; dies erfolgt, wie bereits ausgeführt, bei Temperaturen zwischen 200 und 500°C. Vorzugsweise erfolgt die Temperung bei einer Temperatur zwischen 300 und 400°C. Der Temperprozeß selbst wird im allgemeinen innerhalb eines Zeitraums von 0,5 bis 8 h durchgeführt, vorzugsweise innerhalb von 1 bis 4 h.

Die nach dem erfindungsgemäßen Verfahren hergestellten hochwärmebeständigen organischen Dielektrika können zur Herstellung von Passivierungsschichten auf Halbleiterbauelementen, von Dünn- und Dickfilmschaltungen, von Isolierschichten als Bestandteil von Schichtschaltungen und von miniaturisierten Isolierschichten auf elektrisch leitenden und/oder halbleitenden und/oder isolierenden Basismaterialien, insbesondere im Bereich der Mikroelektronik, Anwendung finden, wobei diese Isolierschichten im Bauteil verbleiben können. Allgemein können diese Dielektrika zur dauerhaften Beschichtung von Oberflächen, als planarisierende Schutz- und Isolierschichten in der Elektrotechnik und der Elektronik oder als Orientierungsschichten in Flüssigkristalldisplays verwendet werden.

Zur Herstellung einer Polymer-Vorstufe durch Homo-Polykondensation wird beispielsweise folgendermaßen vorgegangen: 10 Gewichtsteile 3-Amino-4-hydroxybenzoesäure und 20,4 Gewichtsteile Triphenylphosphin werden in 160 Gewichtsteilen Pyridin gelöst und mit 23,3 Gewichtsteilen Hexachlorethan versetzt (vgl. "Macromolecules", Vol. 18 (1985), Seiten 616 bis 622). Nach Ablauf der Reaktion wird die überstehende Pyridinlösung abgetrennt. Das Polymer wird mit ca. 150 Gewichtsteilen Methanol aufgenommen, mit 800 Gewichtsteilen Aceton ausgefällt, abgesaugt, mit Aceton nachgewaschen und im Vakuum getrocknet. Zur Reinigung werden 5 Gewichtsteile Polymer in 50 Gewichtsteilen Methanol gelöst, dann wird in Aceton oder Essigester ausgefällt, abgesaugt und getrocknet.

## Patentansprüche

1. Verfahren zur Herstellung hochwärmebeständiger Dielektrika auf der Basis organischer Polymerer auf einem Substrat, **dadurch gekennzeichnet,** daß ein oligomeres und/oder polymeres Hydroxypolyamid, gelöst in einem organischen Lösungsmittel, auf das Substrat aufgebracht wird, daß das Lösungsmittel entfernt wird und daß das Hydroxypolyamid durch Tempern bei einer Temperatur zwischen 200 und 500°C in ein Polybenzoxazol übergeführt wird, wobei das Hydroxypolyamid folgende Struktur aufweist: 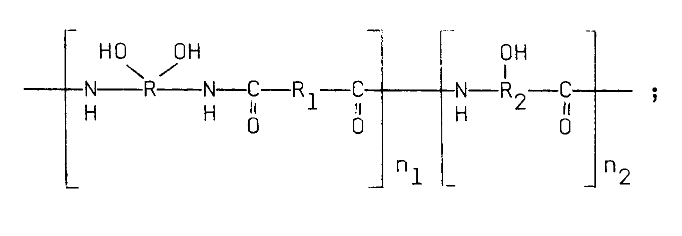 R, R₁ und R₂ sind dabei aromatische Reste,
und für n₁ und n₂ gilt folgendes:
n₁ und n₂ = 1 bis 100 oder
n₂ = 1 bis 100 und n₁ = 0.

2. Verfahren nach Anspruch 1, **dadurch gekennzeichnet,** daß als Hydroxypolyamid ein Polykondensationsprodukt von 3-Amino-4-hydroxybenzoesäure verwendet wird.

3. Verfahren nach Anspruch 1 oder 2, **dadurch gekennzeichnet,** daß bei einer Temperatur zwischen 300 und 400°C getempert wird.

4. Verfahren nach einem der Ansprüche 1 bis 3, **dadadurch gekennzeichnet,** daß innerhalb eines Zeitraums von 0,5 bis 8 h, vorzugsweise 1 bis 4 h, getempert wird.

5. Verfahren nach einem oder mehreren der Ansprüche 1 bis 4, **dadurch gekennzeichnet,** daß als Lösungsmittel N-Methylpyrrolidon und/oder N.N-Dimethylacetamid verwendet wird.

6. Verfahren nach einem oder mehreren der Ansprüche 1 bis 5, **dadurch gekennzeichnet,** daß der Lösung ein Haftvermittler und/oder ein Benetzungsmittel zugegeben wird.

7. Verfahren nach einem oder mehreren der Ansprüche 1 bis 6, **dadurch gekennzeichnet,** daß die Lösung mittels Schleudertechnik auf das Substrat aufgebracht wird.

8. Verfahren nach einem oder mehreren der Ansprüche 1 bis 7, **dadurch gekennzeichnet,** daß das Lösungsmittel bei einer Temperatur zwischen 50 und 120°C entfernt wird.

9. Verwendung der nach dem Verfahren nach einem oder mehreren der Ansprüche 1 bis 8 hergestellten Dielektrika zur dauerhaften Beschichtung von Oberflächen, als planarisierende Schutz- und Isolierschichten in der Elektrotechnik und der Elektronik oder als Orientierungsschichten in Flüssigkristalldisplays.

## Claims

1. Method for preparing highly heat-resistant dielectrics, based on organic polymers, on a substrate, characterised in that an oligomeric and/or polymeric hydroxypolyamide, dissolved in an organic solvent, is applied to the substrate, in that the solvent is removed and in that the hydroxypolyamide is converted into a polybenzoxazole by annealing at a temperature of between 200 and 500°C, in which case the hydroxypolyamide has the following structure: 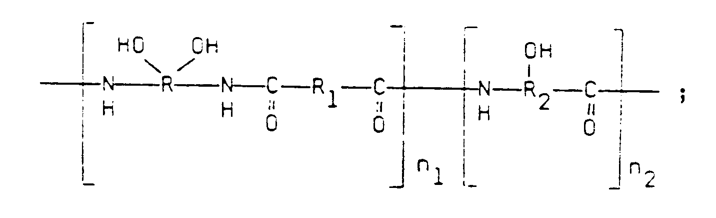 whereby R, R₁ and R₂ are aromatic residues; and the following applies to n₁ and n₂:
n₁ and n₂ = 1 to 100 or
n₂ = 1 to 100 and n₁ = 0.

2. Method according to claim 1, characterised in that a polycondensation product of 3-amino-4-hydroxybenzoic acid is used as the hydroxypolyamide.

3. Method according to claim 1 or 2, characterised in that annealing is carried out at a temperature of between 300 and 400°C.

4. Method according to one of the claims 1 to 3, characterised in that annealing is carried out within a time period of 0.5 to 8 h, preferably 1 to 4 h.

5. Method according to one or several of the claims 1 to 4, characterised in that N-methylpyrrolidone and/or N.N-dimethyl acetamide is used as a solvent.

6. Method according to one or several of the claims 1 to 5, characterised in that an adhesion promoter and/or a wetting agent is added to the solution.

7. Method according to one or several of the claims 1 to 6, characterised in that the solution is applied to the substrate by means of a centrifuging technique.

8. Method according to one or several of the claims 1 to 7, characterised in that the solvent is removed at a temperature of between 50 and 120°C.

9. Use of the dielectrics prepared according to the method according to one or several of the claims 1 to 8 for permanently coating surfaces, as planarizing protecting and insulating layers in electrotechnology and electronics or as orienting layers in liquid-crystal displays.

## Revendications

1. Procédé de fabrication de matériaux diélectriques résistant bien à la chaleur à base de polymères organiques sur un substrat, caractérisé en ce qu'un hydroxypolyamide oligomère et/ou polymère dissous dans un solvant organique est appliqué sur le substrat, que le solvant est éliminé et que l'hydroxypolyamide est transformé en un polybenzoxazol par étuvage après cuisson à une température comprise entre 200 et 500°C, ledit hydroxypolyamide présentant la structure suivante 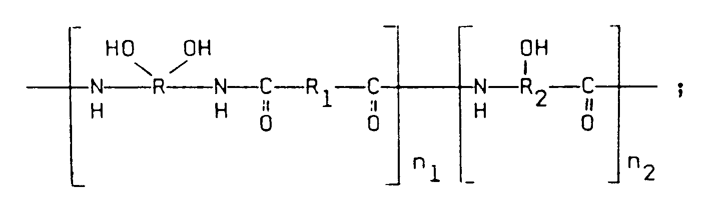 dans laquelle R,R₁ et R₂ sont des radicaux aromatiques, et n₁, et n₂ répondent aux conditions suivantes:
n₁ et n₂ = 1 à 100 ou
n₂ = 1 à 100 et n₁ = 0.

2. Procédé selon la revendication 1, caractérisé en ce que l'on utilise comme hydroxypolyamide un produit de polycondensation de l'acide 3-amino-4-hydroxy-benzoïque.

3. Procédé selon la revendication 1 ou 2, caractérisé en ce que l'on effectue l'étuvage après cuisson à une température comprise entre 300 et 400°C.

4. Procédé selon l'une des revendications 1 à 3, caractérisé en ce que l'on effectue l'étuvage après cuisson pendant une durée de 0,5 à 8 heures et, de préférence, de 1 à 4 heures.

5. Procédé selon l'une des revendications 1 à 4, caractérisé en ce que l'on utilise comme solvant la N-méthylpyrrolidone et/ou le N,N-diméthylacétamide.

6. Procédé selon une ou plusieurs des revendications 1 à 5, caractérisé en ce que l'on ajoute à la solution un agent de pontage et/ou un agent mouillant.

7. Procédé selon une ou plusieurs des revendications 1 à 6, caractérisé en ce que la solution est appliquée sur le substrat par une technique de centrifugation.

8. Procédé selon une ou plusieurs des revendications 1 à 7, caractérisé en ce que le solvant est éliminé à une température comprise entre 50 et 120°C.

9. Utilisation des matériaux diélectriques préparés selon le procédé conforme à une ou plusieurs des revendications 1 à 8 pour enduire de manière durable des surfaces, comme couches isolantes et de protection d'égalisation en industrie électrotechnique et en électronique ou comme couches d'orientation dans les affichages à cristaux liquides.
